# EUROPÄISCHE PATENTSCHRIFT

(11) **EP 0 998 387 B1**
(45) Veröffentlichungstag und Bekanntmachung des Hinweises auf die Patenterteilung: **26.11.2003**
(21) Anmeldenummer: 98941349.7
(22) Anmeldetag: 16.07.1998
(51) Int. Cl.: B32B 27/06, A47B 77/02, A47B 13/08

(54) **PLATTENFÖRMIGER WERKSTOFF**
PANEL-SHAPED MATERIAL
MATERIAU SOUS FORME DE PANNEAU

(30) Priorität: 26.07.1997 DE 19732216
(43) Veröffentlichungstag der Anmeldung: 10.05.2000
(73) Patentinhaber: Schock GmbH, 73614 Schorndorf (DE)
(72) Erfinder: SCHOCK, Friedrich, sen, D-73614 Schorndorf (DE); SCHOCK, Karl, D-73614 Schorndorf (DE); HIEBER, Gunter, D-73614 Schorndorf (DE)
(74) Vertreter: Crazzolara, Helmut, Dr.
(86) Internationale Anmeldenummer: EP9804445
(87) Internationale Veröffentlichungsnummer: WO99004972

(56) Entgegenhaltungen:
- EP-A- 0 310 935
- WO-A-89/11240
- WO-A-91/19444
- DE-A- 19 535 158
- DE-U- 9 100 507
- US-A- 5 413 840

## Beschreibung

Die Erfindung betrifft einen plattenförmigen Werkstoff, insbesondere zur Verwendung als Küchenarbeitsplatte, Tischplatte oder dgl. sowie ein Verfahren zu seiner Herstellung.

Platten für diese Verwendungszwecke sind vielfältig in Form von aus plattenförmigen Trägern aus einem Holzwerkstoff mit einer darauf aufgebrachten Deckschicht zur Bildung einer Nutzfläche und mit einer an mindestens einer Seitenkante des Trägers angeordneten, mit der Deckschicht einstückigen Abdeckung bekannt.

Am geläufigsten sind Oberflächen- und Arbeitsflächenplatten, welche aus einer Spanplatte als Trägerschicht und einer dünnen (Dicke < 1 mm) Deckschicht gebildet werden, für welche ebenso wie für eine Abdeckung an den Seitenkanten dekorative Hochdruck-Schichtpreßstoffplatten (HPL) Verwendung finden, z.B. von Resopal. Die dünne Deckschicht ist empfindlich gegen Beschädigungen durch spitze bzw. scharfe Gegenstände. Wird die Oberfläche verletzt, dringt Feuchtigkeit in die nicht feuchtebeständige Trägerschicht ein. Diese quillt auf und hebt die dünne Deckschicht ab. Dasselbe Problem tritt bei Fugen auf, die entstehen, wenn zwei Platten, z.B. bei einer Küchenarbeitsplatte, miteinander verbunden werden. Wird die Abdichtung nicht sorgfältig durchgeführt, kann wiederum Feuchtigkeit in die Trägerschicht eindringen und diese zum Quellen bringen. Heiße Töpfe, die auf der Oberfläche abgestellt werden, führen ebenfalls zur Beschädigung der dünnen Schicht mit den oben beschriebenen Konsequenzen.

Daneben wurden schon plattenförmige Werkstoffe mit einer Deckschicht aus sogenannten Solid Surface Materialien, wie z.B. Corian® verwendet, bei denen die Dicke der Deckschicht ca. 13 mm beträgt, um insbesondere bei der Verwendung als Küchenarbeitsplatte sicherzustellen, daß auf der Platte abgestellte heiße Töpfe nicht zur Beschädigung oder gar Zerstörung der Deckschicht führen. Die Verarbeitung dieser Materialien erfordert große Sorgfalt: Ausschnitte für Küchenspülen oder Herdplatten müssen herausgefräst und die Fräskanten gebrochen werden, um etwaige Kerbwirkungen zu vermeiden, die insbesondere im Radienbereich des Ausschnitts zur Rißbildung führen können.

Aufgrund der relativ großen Dicke der Deckschicht wird bei den Corian®-Werkstoffen häufig kein plattenförmiger Träger sondern anstelle dessen eine Lattenunterkonstruktion verwendet. Bei den Corian®-Werkstoffen werden die Abdeckungen der Seitenkanten durch Anleimen von Abdeckprofilen hergestellt, so daß im Stoßbereich Fugen vorhanden sind. Diese Fugen sind verschmutzungsanfällig und damit insbesondere im Küchen- und Badbereich weniger erwünscht.

Da die Rahmenunterkonstruktion sowie die Seitenkanten manuell angebracht werden müssen, erfordert die Verarbeitung dieser Materialien einen hohen manuellen und damit personellen Aufwand und resultiert in einem hochpreisigen Produkt.

Darüber hinaus verlangen die Corian®-Materialien einen relativ hohen Materialeinsatz von hochpreisigen gefüllten Kunststoffmaterialien. Um Verzugsprobleme zu mildern müssen die Corian@-Werkstoffe mit einer elastischen Schicht, insbesondere Silikonklebern, mit dem Träger verbunden werden.

Ferner sind sogenannte Sandwichplatten bekannt, beispielsweise aus der DE-A-38 17 224, bei denen der plattenförmige Träger zwischen zwei Deckschichten angeordnet ist. Eine der Deckschichten bildet hierbei die Nutzfläche, während die andere Deckschicht als sogenannter Gegenzug dient, um ein Verziehen der Platte zu vermeiden. Die in dieser Druckschrift genannten Schichtdicken liegen im Bereich von 3 bis 7 mm. Die Fertigung solcher Sandwichplatten ist relativ aufwendig und erfordert bezogen auf die zur Bildung der Deckschicht verwendeten Kunststoffmaterialien einen relativ hohen Materialeinsatz.

Aus der DE-U 91 00 507 sind plattenförmige Produkte bekannt; bei denen ein Tragkörper allseitig von einer Kunststoffschicht umgeben ist.

Die EP-A 0 310 935 lehrt, daß ein als Küchenarbeitsplatte verwendbarer plattenförmiger Werkstoff mit einer Sandwich-Struktur dadurch hergestellt werden kann, daß zunächst die Deckschicht mit Abschlußkanten hergestellt und durch Auflegen einer Unterschicht auf die Abschlußkanten eine mit einer schaumbildenden Kunststoffmasse befüllbare Kavität gebildet wird. Die Unterschicht ist dabei in Verbindung mit der Schaumstoff-Zwischenschicht und der Deckschicht mitbestimmend für die mechanischen Eigenschaften der Sandwichplatte.

Aufgabe der vorliegenden Erfindung ist es, einen plattenförmigen Werkstoff vorzuschlagen, der preisgünstig herzustellen ist und der auch in feuchter Umgebung stabil ist.

Diese Aufgabe wird bei dem eingangs beschriebenen Werkstoff erfindungsgemäß dadurch gelöst, daß auf dem Träger nur einseitig und ohne Gegenzugschicht eine Deckschicht angeordnet ist, daß die Deckschicht und die Abdeckung der Seitenkante aus einem mit einem anorganischen Füllstoff gefüllten Kunststoffmaterial hergestellt sind, wobei die Deckschicht eine Dicke im Bereich von 5 bis 10 mm aufweist, und daß die Deckschicht mit dem Träger mittels eines aushärtbaren Harzes vollflächig und im wesentlichen blasenfrei verbunden ist.

ErfindungsgemäB sind Werkstoffe möglich, die neben ihren funktionellen Eigenschaften auch in hervorragendem Maße dekorativ wirken und den oben diskutierten hochpreisigen Produkten in jeder Hinsicht mindestens ebenbürtig sind. Darüber hinaus erlaubt der erfindungsgemäße Werkstoff einen ökonomischen Einsatz der hochpreisigen Materialien zur Herstellung der Deckschicht und bietet ferner erhebliche Rationalisierungspotentiale in Bezug auf die Fertigung der einbaufähigen fertigen Arbeitsplatten. Weiterhin beobachtet man ein gegenüber den herkömmlichen Solid Surface Materialien ein verbessertes Rißverhalten bzw. Rißbeständigkeit, und die Materialien bleiben auch in feuchter Umgebung stabil. Ferner bietet der erfindungsgemäße plattenförmige Werkstoff vielfältige Möglichkeiten der Profilierung an Rändern und Kanten.

Überraschenderweise hat sich gezeigt, daß sich mit anorganischen Füllstoffen gefüllte Kunststoffe zur Herstellung einer mit der Abdeckung der Seitenkante(n) des plattenförmigen Trägers einstückigen Deckschicht eignen ohne daß die zu befürchtenden Verzugsprobleme auftreten, wenn zunächst die Deckschicht einstückig mit der Seitenkanten-Abdeckung hergestellt und dann der plattenförmige Träger mit der Deckschicht vollflächig verbunden wird. Wesentlich ist hierbei die Einhaltung der erfindungsgemäßen Dicke der Deckschicht von ca. 5 bis ca. 10 mm. Die vollflächige, im wesentlichen blasenfreie Verklebung der Deckschicht mit dem plattenförmigen Träger garantiert auch im Gebrauch eine hervorragende HeiBtopffestigkeit und Rißfestigkeit,auch bei den geringeren Schichtdicken der Deckschicht verglichen mit den herkömmlichen Solid Surface Materialien, wie z.B. Corian®. Auf eine Gegenzugschicht wird bei den erfindungsgemäßen plattenförmigen Werkstoffen verzichtet.

Bei der Verklebung der Deckschicht mit dem plattenförmigen Träger wird bevorzugt eine aushärtbare Harzschicht verwendet, wobei das Harzmaterial mengenmäßig so aufgetragen wird, daß es gegebenenfalls bestehende Unebenheiten der Deckschichtrückseite sowie der korrespondierenden Trägeroberfläche ausgleichen kann. Dies vereinfacht die Herstellung der Deckschicht aus dem Kunststoffmaterial erheblich, da dort das Augenmerk auf die Sichtseite gerichtet werden kann und wegen der Oberflächenbeschaffenheit der Rückseite keine besonderen Maßnahmen zu treffen sind.

Der Klebstoff kann aus einer Vielzahl von erhältlichen Materialien ausgewählt werden, wobei vorzugsweise die folgenden Anforderungen an den Klebstoff gestellt werden:

Der Klebstoff soll eine hohe Temperaturbeständigkeit aufweisen, wie sie beispielsweise von polymersierenden Klebern, wie z.B. Polyurethanklebern etc. gewährleistet wird, damit unter Temperaturbelastung, z.B. durch einen abgestellten heißen Topf, noch ein kraftschlüssiger Verbund zum Träger gewährleistet wird.

Weiterhin soll das Klebesystem eine ausgewogene Elastizität und Härte aufweisen. Zum einen müssen Schubspannungen, bedingt durch lokale Temperaturbelastungen, auf den Träger übertragen und verteilt werden können, um eine Rißbildung zu vermeiden, zum anderen darf der Klebstoff nicht zu spröde sein, so daß geringe Unterschiede in der Wärmeausdehnung der Verbundsystems Träger/Deckschicht nicht zum Verzug der Platte führen.

Das Kunststoffmaterial wurde bislang noch nicht näher beschrieben, bis auf daß es einen anorganischen Füllstoff enthalten soll. Es kommen auch eine Vielzahl verschiedener gefüllter Kunststoffmaterialien in Frage, wobei ohne den Anspruch auf Vollständigkeit zu erheben auf die in den folgenden Druckschriften beschriebenen sowie damit verwandte Materialien hingewiesen sei: DE-A-24 49 656 und US-A-3,847,865.

Je nachdem ob Oberflächen in Uni-Farben oder mit einem granit-ähnlichen Dekor hergestellt werden sollen kommen unterschiedliche Rezepturen für die Herstellung der Deckschicht zum Einsatz.

Als für die Herstellung der Deckschicht und der Abdeckung der Seitenkante(n) des Trägers besonders geeignet hat sich eine aushärtbare Reaktionsmasse erwiesen, welche eine Polymerphase mit einem darin eingelagerten partikelförmigen Füllmaterial bildet. Die Polymerphase selbst ist dabei bevorzugt frei von anorganischen Füllstoffen und beinhaltet allenfalls bis zu 20 Gew.%, vorzugsweise bis zu 15 Gew.%, weiter bevorzugt bis zu 10 Gew.% an anorganischen Zuschlagstoffen in Partikelform. Das partikelförmige Füllmaterial muß in der Polymerphase quellbar sein und umfaßt ein mit einem anorganischen Füllstoff gefülltes Harzmaterial. Das gefüllte Harzmaterial weist einen Anteil an anorganischem Füllstoff im Bereich von 50 bis 80 Gew.% mit einer mittleren Korngröße von ca. 5 bis ca. 100 µm sowie gegebenenfalls Pigmente zur Erzielung besonderer Farbeffekte auf. Das Füllmaterial (in den folgenden Beispielen kurz Granulat genannt) wiederum wird in einer Korngröße von ca. 60 bis 8000 µm verwendet und in einem Anteil von ca. 30 bis ca. 75 Gew.% in dem Kunststoffmaterial enthalten sein. Die Viskosität der Mischung aus Reaktionsmasse und gequollenem Füllmaterial (gegebenenfalls mit anorganischen Zuschlagstoffen) ist so hoch, daß die Mischung nicht mehr pump- oder gießbar ist.

Gerade solche Mischungen sind aber hervorragend geeignet in einer in einer Presse angeordneten Form eine lunkerfreie Füllung der Form zu ergeben, ohne daß es zu einer Zerstörung der Partikelstruktur kommt und dieses unbeeinträchtigt seine dekorative und/oder kontrastierende Wirkung an der Sichtseite zur Geltung bringen kann, falls dies, wie z.B. beim Granitdekor erwünscht ist.

Herstellbar sind aber auch unifarbene Deckschichten und Abdekkungen der Seitenkanten des Trägers, wobei dann alternativ allerdings auf Reaktionsmassen und Mischungen zurückgegriffen wird die sich an der Offenbarung der zunächst diskutierten Druckschriften (DE-A-24 49 656 und US-A-3,847,865) orientieren. Die zuvor empfohlenen Mischungen mit quellbarem Füllmaterial hat allerdings den großen Vorteil, daß ohne besondere verfahrensmäßige Vorkehrungen Sichtseiten der Deckschicht erhalten werden, die frei von Fließlinien sind. Auch vermeiden solche Mischungen Sedimentationsprobleme und damit eine ungleiche Verteilung der Füllstoffe in dem Kunststoffmaterial.

Die Reaktionsmasse wird bevorzugt auf der Basis von Polyesteroder Poly(meth)acrylsystemen verwendet.

Bevorzugt wird die Abdeckung der Seitenkanten des Trägers in Form einer Abdeckleiste, im folgenden auch Bruttokante genannt, ausgebildet, wobei weiter bevorzugt die Dicke der Abdeckleiste so gewählt wird, daß eine spanende Bearbeitung möglich ist. Bevorzugt wird die Dicke der Abdeckleiste das 1,3 fache, weiter bevorzugt das 1,5 fache oder mehr der Dicke der Deckschicht betragen. Die Abdeckleiste ist dann profilierbar und bei der oben beschriebenen Materialauswahl auch mit herkömmlichen Holzbearbeitungsmaschinen be- und verarbeitbar.

Eine hervorragende Heißtopffestigkeit der erfindungsgemäßen plattenförmigen Werkstoffe erzielt man mit solchen Deckschichten, deren Wärmeleitfähigkeit senkrecht zur Deckschichtoberfläche mindestens ca. 0,6 W/mK beträgt. Dies gewährleistet eine ausreichende Ableitung der Wärme zu dem Träger.

Bei bevorzugten plattenförmigen Werkstoffen beträgt der Elastizitätsmodul des mit anorganischem Füllstoff gefüllten Kunststoffmaterials 5000 N/mm² oder mehr.

Der plattenförmige Träger kann aus einer Vielzahl von Werkstoffen ausgewählt werden, wobei jedoch aufgrund der einfachen Beund Verarbeitbarkeit Holzwerkstoffe verwendet werden. Die verwendeten Holzwerkstoffe weisen vorzugsweise eine Holzfeuchte von 7 - 8 Gew.% auf. Ein vorzüglich geeigneter Holzwerkstoff für den Träger liegt in den sogenannten OSB-Platten vor (OSB = oriented structural board). Bei diesen Platten sind Schwindund Quellmaße in % pro % Holzfeuchteänderung zu erzielen, die für die Plattenstärke kleiner 0,5 % und für die Plattenbreite kleiner 0,1 % liegen. Die Längenquellung ist praktisch ohne Bedeutung, liegt sie doch bei weniger als 0,02 %.

Eine mindestens gleichwertige Alternative ist in stabverleimten Vollholzplatten oder Hirnholzplatten (auch Stirnholzplatten genannt) zu sehen. Hierbei kann mit Vorteil so vorgegangen werden, daß die Holzstäbe oder -würfel zur Bildung der Platte in die fertiggestellte Deckschicht mit Abdeckleisten einzeln und mit Leim versehen eingelegt werden. Auf diese Weise kann der Verschnitt an Holzwerkstoff auf ein Minimum reduziert werden.

Dabei werden entsprechend vorgetrocknete und gehobelte Vierkanthölzer bzw. Hirnholzstücke entweder zwei- oder allseitig mit einem wasserfesten Leim benetzt und einzeln nacheinander in eine von der Deckschicht und den allseitigen Abdeckleisten gebildeten Halbschale, die einer Kuchenblechform ähnlich ist, eingelegt. Auf diese Weise läßt sich die Stabverleimung aus Vierkanthölzern bzw. die Hirnholzplatte direkt in der Halbschale erzeugen. Selbstverständlich kann auch eine vorgefertigte stäbchenverleimte, stabverleimte oder hirnholzverleimte Platte in die Halbschale nach Zuschnitt eingeklebt werden. Als untere Abdeckschicht wird bei Bedarf noch ein Holzfurnier oder eine Aluminiumfolie aufgeleimt und der komplette Aufbau in einer Presse unter Druck gehärtet.

Als Klebstoff wird hierbei bevorzugt ein Ein- oder Zweikomponenten-Polyurethanharz verwendet. Die Temperaturbeständigkeit bei kurzzeitigen Spitzentemperaturen muß bei > 90 °C und für die Dauerbelastung bei > 70 °C liegen. Ein gewisses Maß für die Elastizität/Sprödigkeit des Klebstoffs gibt zum einen die Shore-Härte und zum anderen die Reißdehnung. Bevorzugt werden sogenannte zähharte Klebstoffe mit einer Shore-Härte von 70 bis 90 (Shore A), bevorzugt mit Shore-Härte ca. 75 (Shore A).

Die so in der Halbschale erzeugte stäbchenverleimte, stabverleimte oder hirnholzverleimte Platte als Träger hat bezüglich der Feuchtequellung noch bessere Eigenschaften als die zuvor empfohlene OSB-Platte und das Einkleben in großformatige Halbschalen ist einfacher und damit wirtschaftlicher.

Bei dem erfindungsgemäßen Verfahren zur Herstellung der erfindungsgemäßen plattenförmigen Werkstoffen wird zunächst darauf zu achten sein, daß die Deckschicht gemeinsam mit der Abdeckung der Seitenkante(n) des plattenförmigen Trägers einstückig aus einem Kunststoffmaterial gebildet wird und daß auf die Rückseite der Deckschicht der plattenförmige Träger vollflächig und im wesentlichen blasenfrei mittels eines aushärtbaren Harzes aufgeklebt wird.

Werden alle Seitenkanten des Trägers abgedeckt, entsteht zusammen mit der Deckschicht eine halbschalenartige Form ähnlich einem Kuchenblech, in die der plattenförmige Träger eingeklebt wird. Hierbei können vorgefertigte Platten, die auf die erforderlichen Maße zugeschnitten sind, verwendet werden oder aber wie oben beschrieben Hirnholzplatten oder stäbchenverleimte oder stabverleimte Platten direkt in der Halbschale erzeugt werden. Im letzteren Fall werden die Stäbe bevorzugt in Längsrichtung eingelegt, wobei die Orientierung der Jahresringe berücksichtigt wird, so daß die Breitenquellung minimal gehalten wird. Die Stäbe werden zu diesem Zweck so eingebracht, daß die Jahresringe direkt zueinander benachbarter Stäbe immer senkrecht zueinander stehen. Bei Hirnholzplatten ist die Faserrichtung des Hirnholzes immer senkrecht zur Ebene der Deckschicht orientiert.

Auf eine Verleimung zwischen den Hirnholzstücken bzw. Stäbchen oder Stäben, d.h. der senkrecht zur Plattenebene angeordneten Kontaktflächen der Holzstücke bzw. Stäbchen oder Stäbe untereinander, kann gegebenenfalls verzichtet werden, wobei sich Vorteile dadurch ergeben, daß die Hirnholzstücke bzw. Stäbchen oder Stäbe relativ zueinander beweglich sind, was sich auf einen Verzug der Platte günstig auswirkt.

Bleiben die Holzstäbchen oder -stäbe bzw. die Hirnholzstücke unverklebt, wird mit Vorteil ein feuchtigkeitsvernetzender Polyurethankleber verwendet, der aufschäumbar ist. Aufgrund des beim Aushärten angewandten Preßdrucks vermeidet man eine Blasenbildung in der den Träger mit der Deckschicht verbindenden Klebefläche, erzielt aber andererseits den Effekt, daß Kleberschaum in die Fugen zwischen den Holzstäbchen oder -stäben bzw.

Hirnholzstücken eindringt und diese seitlich miteinander verklebt und damit fixiert.

Bei dem erfindungsgemäßen Verfahren wird die gequollene Mischung der aushärtbaren Reaktionsmasse bevorzugt bei 100 bis 130 °C und einem Druck von 3 bis 10 bar in der Form gepreßt und ausgehärtet. Dabei wird über eine Steuerung der Temperatur der Form zuerst der Bereich der Seitenkanten-Abdeckleiste(n) und dann der Deckschicht ausgehärtet.

Bevorzugt wird die Mischung der Reaktionsmasse während einer Zeitdauer von 20 min. bis 1 h ausgehärtet.

Bei einer bevorzugten Variante des erfindungsgemäßen Verfahrens wird eine Form zur Herstellung der Deckschicht und der Abdeckleiste(n) verwendet, bei der der den Abdeckleisten zuzurechnende Teil der Form getrennt von dem der Deckschicht entsprechenden Teil der Form beheizbar ist.

Dabei werden diese Teile der Form bevorzugt so beheizt, daß die Abdeckleisten mit einer Vorlaufzeit von ca. 2 bis ca. 10 min. gegenüber der Deckschicht ausgehärtet werden.

Weiter bevorzugt wird die Abdeckschicht auf der Sichtseite beginnend ausgehärtet.

Vorzugsweise wird die ausgehärtete Deckschicht mit den Seitenkanten-Abdeckleisten, vorzugsweise nach einer Entnahme aus der Form, einem Temperungsschritt bei einer Temperatur unterhalb dem Glasübergangspunkt unterworfen.

Um den erfindungsgemäßen plattenförmigen Werkstoff weiter unempfindlich gegen Wassereinwirkung zu machen, kann eine Lackierung der Rückseite angezeigt sein. Alternativ kann beispielsweise eine Aluminiumfolie, bevorzugt einseitig lackiert, als Wasserdampfbarriere aufgeklebt werden, welche aus Gründen der einfacheren Handhabbarkeit und Verletzungsresistenz eine Dicke von ≥ 100 µm aufweisen sollte.

Diese und weitere Vorteile der Erfindung werden im folgenden anhand von Beispielen im einzelnen erläutert.

### 1. Herstellung der Halbschalen

### Beispiel 1: feinkörnige Granit-Dekore

| | | |
|---|---|---|
| Rezeptur | 29.790 g | Acrylsirup (20-%ig mit PMMA-Präpolymer, Molekulargewicht 100.000 Dalton) |
| | 1.323 g | Trimethylolpropantrimethacrylat (TRIM) |
| | 88 g | Stearinsäure |
| | 110,3 g | Di-(4-tert-butylcyclohexyl)-peroxidi carbonat (BCHPC) |
| | 189,0 g | Di-Lauroylperoxyd (LP) |
| | | |
| | 11.100 g | Granulat unpigmentiert, 0,1 - 0,6 mm |
| | 4.500 g | Granulat weiß, 0,1 - 0,6 mm |
| | 17.650 g | Granulat schwarz, 0,1 - 0,6 mm |
| | 5.250 g | Aluminiumtrihydroxid (ATH) Korngrößenverteilung 0 - 100 µm mittlere Korngröße d₅₀ = 35 µm |

Das Harz wird vorgelegt und alle flüssigen und aufzulösenden Komponenten zugegeben und intensiv vermischt. Dann wird das ATH und das Granulat zugegeben und nochmals intensiv gemischt. Anschließend wird die Mischung entgast.

Nach dem Mischen erhält man 70 kg einer zunächst noch dünnflüssigen Masse, die je nach Temperatur nach 1,5 h gequollen und nicht mehr pumpfähig ist.

Ansatzgröße für eine Halbschale
mit den Außenmaßen 110 cm x 65 cm : 11,4 kg

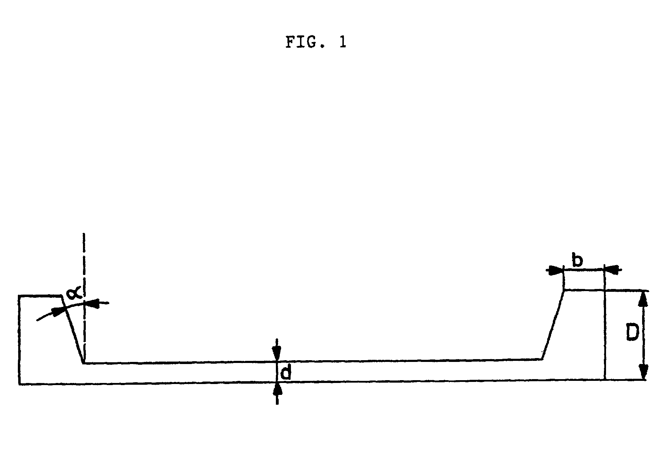

Nach dem Gießen erhält man eine Halbschale mit einem feinstrukturierten, granit-ähnlichen Dekor in der Grundfarbe schwarz, deren Form schematisch in Schnittansicht in Figur 1 dargestellt ist. Typische Zahlenwerte für die in Figur 1 enthaltenen Parameter sind: α ca. 10° gegen die Vertikale,
b ca. 10 mm, d ca. 7 mm, D ca. 40 mm.

### Beispiel 2: mittelgrobe Granit-Dekore

| | | |
|---|---|---|
| Rezeptur | 29.790 g | Acrylsirup (20-%ig mit PMMA-Präpolymer, Molekulargewicht 100.000 Dalton) |
| | 1.323 g | TRIM |
| | 88 g | Stearinsäure |
| | 110,3 g | BCHPC |
| | 189,0 g | LP |
| | 23.275 g | Granulat grün, 0,1 - 0,6 mm |
| | 1.796 g | Granulat weiß, 0,1 - 0,3 mm |
| | 3.790 g | Granulat weiß, 0,1 - 0,6 mm |
| | 798 g | Granulat weiß, 0,6 - 1,2 mm |
| | 1.995 g | Granulat weiß, 1,2 - 2,5 mm |
| | 798 g | Granulat schwarz, 0,1 - 0,6 mm |
| | 399 g | Granulat schwarz, 0,6 - 1,2 mm |
| | 299 g | Granulat blau, 1,2 - 1,6 mm |
| | 100 g | Granulat blau, 0,1 - 0,6 mm |
| | | |
| | 5.250 g | ATH wie in Beispiel 1 Korngrößenverteilung 0 - 100 µm mittlere Korngröße d₅₀ = 35 µm |

Das Harz wird vorgelegt und alle flüssigen und aufzulösenden Komponenten zugegeben und intensiv vermischt. Dann wird das ATH und das Granulat zugegeben und nochmals intensiv gemischt. Anschließend wird die Mischung entgast.

Nach dem Mischen erhält man 70 kg einer zunächst noch dünnflüssigen Masse, die je nach Temperatur nach 1,5 h gequollen und daher nicht mehr pumpfähig ist.

Ansatzgröße für eine Halbschale
mit den Außenmaßen 110 cm x 65 cm : 11,4 kg

Nach dem Gießen erhält man eine Halbschale mit einem mittelgroben, granit-artigen Dekor in der Grundfarbe grün (vgl. Figur 1).

### Beispiel 3: grobe Granit-Dekore

| | | |
|---|---|---|
| Rezeptur | 29.790 g | Acrylsirup (20-%ig mit PMMA-Präpolymer, Molekulargewicht 100.000 Dalton) |
| | 1.323 g | TRIM |
| | 88 g | Stearinsäure |
| | 110,3 g | BCHPC |
| | 189,0 g | LP |
| | | |
| | 22.100 g | Granulat unpigmentiert, 0,1 - 0,6 mm |
| | 3.900 g | Granulat unpigmentiert,2,5 - 5 mm |
| | 2.800 g | Granulat weiß, 0,1 - 0,6 mm |
| | 550 g | Granulat weiß, 0,6 - 1,2 mm |
| | 1.100 g | Granulat weiß, 1,2 - 2,5 mm |
| | 550 g | Granulat schwarz, 0,1 - 0,6 mm |
| | 550 g | Granulat schwarz, 0,6 - 1,2 mm |
| | 1.100 g | Granulat schwarz, 1,2 - 2,5 mm |
| | 550 g | Granulat blau, 0,1 - 0,6 mm |
| | | |
| | 5.250 g | ATH (wie Beispiel 1) Korngrößenverteilung 0 - 100 µm mittlere Korngröße d₅₀ = 35 µm |

Das Harz wird vorgelegt und alle flüssigen und aufzulösenden Komponenten zugegeben und intensiv vermischt. Dann wird das ATH und das Granulat zugegeben und nochmals intensiv gemischt. Anschließend wird die Mischung entgast.

Nach dem Mischen erhält man 70 kg einer zunächst noch dünnflüssigen Masse, die je nach Temperatur nach 1,5 h gequollen und daher nicht mehr pumpfähig ist.

Ansatzgröße für eine Halbschale
mit den Außenmaßen 110 cm x 65 cm : 11,4 kg

Nach dem Gießen erhält man eine Halbschale mit einem mittelgroben, granit-artigen Dekor in der Grundfarbe grau (vgl. Figur 1).

### Beispiel 1 - 3: Gießen und Härten der Halbschalen mit Granit-Dekor:

Als Versuchsform (110 cm x 65 cm) fungiert eine einfache Kuchenblechform, bestehend aus einem Stahlrahmen und einem Messingblech, das so gebogen wurde, daß es die Vertiefung der Halbschale ausbildet und gleichzeitig über dem Rahmen liegt. An den Ecken wurde das Blech verlötet.

Rahmen und untere Plattenseite sind separat beheizbar.

Die obere Form ist als Stempel ausgebildet, um die Geometrie der Halbschale auszubilden.

Als Material für die obere Form haben sich im Versuch nichtmetallische Werkstoffe, wie z.B. Holzwerkstoffe als geeignet erwiesen, die von der Rückseite her aber noch beheizbar oder kühlbar sind. Die Polymerisation wird in einer Presse unter Druck und Temperatur durchgeführt.

Es entsteht eine Halbschale der in Figur 1 dargestellten Art.

Das Kuchenblech ist auf 40°C temperiert und wird außerhalb der Presse mit 11,4 kg Gießmasse befüllt. Die Gießmasse wird als Strang in die Blechmitte eingebracht. Dann wird Polyesterfolie als Trennfolie aufgelegt und die Masse verteilt. Dann wird das Kuchenblech in die Presse gefahren und die Presse geschlossen.

Als Formenabdichtung fungiert eine Gummidichtung, die sich in einer Nut in der Oberform befindet und durch die Trennfolie gegen MMA-Einwirkung geschützt wird. Die Dichtung wird beim Schließen der Presse gegen den Rahmen gedrückt. Die Luft kann zwischen Folie und Rahmen entweichen. Der beim Aushärten auftretende Schrumpf in der Plattenebene wird durch Nachfahren der Presse ausgeglichen.

Im Randbereich kann die Oberform mit einem mit Druckluft beaufschlagbaren Schlauch, Gummihohlprofil oder dergleichen versehen sein. Beim Aushärten wird der Schlauch oder das Gummihohlprofil mit Druckluft mit einem Druck von ca. 3 bis 8 bar beaufschlagt, so daß beim Aushärten der auch parallel zur Plattenebene auftretende Schrumpf ausgeglichen werden kann.

Der Druck der Druckluft richtet sich in oben genannten Grenzen nach dem Flächendruck der Presse.

Die Heizplattentemperatur in der Presse beträgt 120°C. Eine "Temperaturrampe" wird nur insoweit realisiert, als das Kuchenblech ca. 5 min. benötigt, um die Heizplattentemperatur anzunehmen.

| | |
|---|---|
| Temperatur Rahmen | 120°C (Temperaturvorlauf zum Kuchenblech 5 min.) |
| Temperatur Heizplatte | 120°C |
| | |
| Einstellung Presse | 0 - 3 min.: 50 bar (Hydraulikdruck) ab 3 min.: 100 bar (Hydraulikdruck) |
| | |
| Zykluszeit | 35 min. |

Wird die Halbschale in der Presse auf 40°C abgekühlt, so kommt es zu einem leichten Verzug. Öffnet man dagegen die Presse/ Form und kühlt das Kuchenblech/Formteil nur einseitig von unten auf 40°C (15 min.), so erhält man gerade Platten. Vorzugsweise werden die Platten vor dem Verkleben mit dem Träger bei 120° C während 5 Stunden getempert.

### Beispiel 4: Herstellung einer Halbschale in UNI-Farben

| | | |
|---|---|---|
| Rezeptur | 14.362 g | Acrylsirup (27-%ig mit PMMA-Präpolymer, Molekulargewicht 100.000 Dalton) |
| | 314 g | TRIM |
| | 438 g | Stearinsäure |
| | 54 g | BCHPC |
| | 93 g | LP |
| | 373 g | 3-Trimethoxysilyl-propylmethacrylat (MEMO) |
| | 24.440 g | ATH (wie Beispiel 1) Korngrößenverteilung 0 - 100 µm mittlere Korngröße d₅₀ = 35 µm |
| | | |
| | 1.200 g | Farbpaste (Acrylsirup/Titandioxidpigment im Gewichtsverhältnis 3:1)) |

Das Harz wird vorgelegt und alle flüssigen und aufzulösenden Komponenten zugegeben und intensiv vermischt. Dann wird das ATH zugegeben und nochmals intensiv gemischt. Anschließend wird die Mischung entgast.

Man erhält 40 kg einer dünnflüssigen Dispersion einer Viskosität von 5.000 mPa•s.

Ansatzgröße für eine Halbschale
mit den Außenmaßen 110 cm x 65 cm : 12,6 kg
Nach dem Gießen erhält man eine weiße Halbschale (vgl. Figur 1).

Bei gleicher Formentechnologie kann auch mit dünnflüssigen Dispersionen gearbeitet werden:

Beim Auflegen der Folie auf die Oberfläche der Dispersion werden oft größere Luftblasen eingeschlossen, die nachher als Rückseitendefekte inakzeptabel wären. Durch das rückseitige Einlegen eines dünnen Vlieses kann die Luft besser seitlich entweichen und man erhält defektfreie Rückseiten.

Das Kuchenblech wird in die Presse gefahren. Eine Temperaturrampe beim Beheizen wird nur insofern realisiert, als die Form ca. 5 min. benötigt, um die Heizplattentemperatur anzunehmen.

| | |
|---|---|
| Temperatur Rahmen | 110°C (3 min. Temperaturvorlauf zum Kuchenblech) |
| Temperatur Heizplatte | 110°C |
| | |
| Einstellung Presse | 0 - 3 min.: 80 bar |
| | ab 3 min.: 120 bar |
| | |
| Zykluszeit | 50 min. |

Um gerade Platten zu erhalten, muß die Halbschale aus Beispiel 4 im Gegensatz zu Dekoren nach Beispiel 1 ca. 15 min. in der Presse (unter Druck) abgekühlt werden. Danach wird bei 120° C während ca. 5 Stunden getempert.

### 2. Verklebung von Halbschale und Trägerplatte

### Beispiel 5: Stabverleimung/Hirnholzverleimung

Endlos-Stäbe 30 x 30 mm (Holzfeuchte ca. 7 Gew.%) werden an Ober- und Unterseite beleimt und in die Halbschalen gemäß Beispiel 1 eingebracht. Alternativ können bei diesem Schritt auch Hirnholzstücke 60 x 80 mm (Holzfeuchte 7 Gew.%) mit einer Länge in Faserrichtung von 30 mm verwendet werden.

Als Klebstoff wird ein feuchtevernetzendes Polyurethanklebeharz (Fa. Fuller ICEMA 145/66: Konsistenz: pastös) verwendet. Überschüssiger Klebstoff fließt auch in die Fugen zwischen den Stäbchen senkrecht zur Plattenebene. Dies wird durch ein Aufschäumen des Klebstoffs unterstützt. Aufgrund der Pressung während des Aushärtens des Klebstoffs (Pressendruck ca. 1 bis 2 .bar) wird eine Blasenbildung in der zur Deckschicht hin gebildeten Klebeschicht verhindert. Als Abdeckung auf der Rückseite des plattenförmigen Werkstoffs eignet sich beispielsweise eine 100 µm dicke Aluminiumfolie, die eine Dampfsperre bildet.

Der gesamte Aufbau wird in einer Presse bei Raumtemperatur unter Druck gehärtet.
Preßzeit: 2 h

### Beispiel 6: Verleimung von OSB-Platten

In die auf der Sichtseite liegende Halbschale wird die bereits zugeschnittene OSB-Platte einer Stärke von 34 mm gelegt. Die Platte ist in der Mitte mit einer Bohrung (Radius 5 mm) versehen, durch die der Klebstoff injiziert werden kann. Dann wird ein Gummituch, gehalten mit einem Rahmen, über die Platte gelegt. In die Mitte des Gummituches ist ein Stutzen für die Klebstoffinjektion eingebracht, der Stutzen (verschlossen mit einem Kugelhahn) wird in das vorgebohrte Loch eingeführt.
Der Rahmen des Gummituchs wird gegen den ebenen Tisch gepreBt. Dann wird der Hohlraum unter dem Tuch evakuiert. Durch Öffnen des Kugelhahns wird der Klebstoff (Fa. Fuller, ICEMA 145/66, Konsistenz fließfähig) unter der Wirkung des Vakuums langsam zwischen Trägerplatte und Halbschale gesaugt.

Nach Injektion einer bestimmten Menge wird der Kugelhahn geschlossen, das Vakuum aber aufrecht erhalten. Das Gummituch wirkt unter der Luftsäule des äußeren Normaldrucks wie eine Presse. Der Preßdruck liegt bei ca. 0,6 bar.

Als Klebstoff wird ein feuchtevernetzendes Polyurethanharz verwendet. Nach einer Preßzeit von 2 h kann die Platte entnommen werden.

## Patentansprüche

1. Plattenförmiger Werkstoff, insbesondere zur Verwendung als Küchenarbeitsplatte und Tischplatte,
mit einem plattenförmigen Träger aus einem Holzwerkstoff, einer flächig mit dem plattenförmigen Träger verbundenen Deckschicht und mit einer an mindestens einer Seitenkante des Trägers angeordneten Abdeckung, welche einstückig mit der Deckschicht ausgebildet ist,
**dadurch gekennzeichnet, daß** auf dem Träger nur einseitig und ohne Gegenzugschicht eine Deckschicht angeordnet ist, daß die Deckschicht und die Seitenkanten-Abdeckung aus einem mit einem anorganischen Füllstoff gefüllten Kunststoffmaterial hergestellt sind, wobei die Deckschicht eine Dicke im Bereich von 5 bis 10 mm aufweist, und daß die Deckschicht mit dem Träger mittels eines aushärtbaren Harzes vollflächig und im wesentlichen blasenfrei verbunden ist.

2. Plattenförmiger Werkstoff nach Anspruch 1, **dadurch gekennzeichnet, daß** die Abdeckung als Abdeckleiste ausgebildet ist und daß die Dicke der Abdeckleiste vorzugsweise größer ist als die Dicke der Deckschicht.

3. Plattenförmiger Werkstoff nach Anspruch 2, **dadurch gekennzeichnet, daß**, an allen Seitenkänten des Trägers mit der Deckschicht einstückige Abdeckleisten angeordnet sind.

4. Plattenförmiger Werkstoff nach Anspruch 2 oder 3, **dadurch gekennzeichnet, daß** mindestens eine der Abdeckleisten eine Sichtkante bildet und eine Dicke aufweist, die eine spanende Bearbeitung zuläßt.

5. Plattenförmiger Werkstoff nach Anspruch 4, **dadurch gekennzeichnet, daß** die die Sichtkante bildende Abdeckleiste eine Dicke aufweist, die mindestens das 1,3 fache der Dicke der Deckschicht beträgt, weiter bevorzugt mindestens das 1,5 fache.

6. Plattenförmiger Werkstoff nach einem der voranstehenden Ansprüche, **dadurch gekennzeichnet, daß** die Wärmeleitfähigkeit der Deckschicht senkrecht zu ihrer Oberfläche mindestens 0,6 W/mK beträgt.

7. Plattenförmiger Werkstoff nach einem der voranstehenden Ansprüche, **dadurch gekennzeichnet, daß** der Elastizitätsmodul des mit anorganischem Füllstoff gefüllten Kunststoffmaterial 5000 N/mm² oder mehr beträgt.

8. Plattenförmiger Werkstoff nach einem der voranstehenden Ansprüchen, **dadurch gekennzeichnet, daß** der Träger von einem sogenannten OSB-Werkstoff gebildet wird.

9. Plattenförmiger Werkstoff nach einem der Ansprüche 1 bis 7, **dadurch gekennzeichnet, daß** der Träger von einem stäbchen- oder stabverleimten Holzwerkstoff oder einer Hirnholzplatte gebildet wird.

10. Plattenförmiger Werkstoff nach einem der Ansprüche 8 oder 9, **dadurch gekennzeichnet, daß** die Holzfeuchte des Holzwerkstoffs 7 bis 8 Gew.% beträgt.

11. Verfahren zur Herstellung eines plattenförmigen Werkstoffs gemäß einem der Ansprüche 1 bis 10, **dadurch gekennzeichnet, daß** die Deckschicht gemeinsam mit der Seitenkanten-Abdeckung mittels Aushärten eines mit einem anorganischen Füllstoff gefüllten Kunststoffmaterial in einer Form gebildet wird und daß auf die Rückseite der Deckschicht der plattenförmige Träger ohne Gegenzugschicht vollflächig und im wesentlichen blasenfrei mittels eines aushärtbaren Harzes aufgeklebt wird.

12. Verfahren nach Anspruch 11, **dadurch gekennzeichnet, daß** zur Bildung der Deckschicht aus Kunststoffmaterial eine Mischung einer aushärtbaren Reaktionsmasse zur Bildung einer Polymerphase mit einem darin eingelagerten partikelförmigen Füllmaterial aus einem mit dem anorganischen Füllstoff gefüllten Harzmaterial hergestellt wird, wobei die Polymerphase bis zu 20 Gew.%, bezogen auf das Kunststoffmaterial, an anorganischen Zuschlagstoffen umfaßt,
wobei das partikelförmige Füllmaterial in der Reaktionsmasse quellbar ist, wobei das gefüllte Harzmaterial einen Anteil an anorganischem Füllstoff im Bereich von 50 bis 80 Gew.% mit einer mittleren KorngröBe von 5 bis 100 µm aufweist und wobei das Füllmaterial eine Korngröße im Bereich von 60 bis 8000 µm aufweist und in einem Anteil von 30 bis 75 Gew.% in dem Kunststoffmaterial enthalten ist, daß das Füllmaterial in der aushärtbaren Reaktionsmasse solange quellen gelassen wird, bis die Mischung nicht mehr gießfähig ist, daß die Mischung zum Aushärten in eine der von in einer Presse angeordneten Formhälften gegeben, die Form geschlossen und ein vorgegebener Preßdruck auf die Form angewandt und die Mischung in der geschlossenen Form thermisch ausgehärtet wird.

13. Verfahren nach Anspruch 12, **dadurch gekennzeichnet, daß** die Mischung bei 100 bis 130 °C und einem Druck von 3 bis 10 bar in der Form gepreßt und ausgehärtet wird, wobei über eine Steuerung der Temperatur der Form zuerst; der Bereich der Abdeckleiste(n) und dann der Deckschicht ausgehärtet wird.

14. Verfahren nach Anspruch 13, **dadurch gekennzeichnet, daß** die Mischung während einer Zeitdauer von 20 min bis 1 h ausgehärtet wird.

15. Verfahren nach einem der Ansprüche 11 bis 14, **dadurch gekennzeichnet, daß** eine Form zur Herstellung der Deckschicht und der Abdeckleiste(n) verwendet wird, bei der den Abdeckleisten zuzurechnende Teil der Form getrennt von dem der Deckschicht entsprechenden Teil der Form beheizbar ist.

16. Verfahren nach Anspruch 15, **dadurch gekennzeichnet, daß** die Beheizung der Teile der Form so gewählt wird, daß die Abdeckleisten mit einer Vorlaufzeit von 2 bis 10 min gegenüber der Deckschicht ausgehärtet werden.

17. Verfahren nach einem der Ansprüche 11 bis 16, **dadurch gekennzeichnet, daß** die Deckschicht auf der Sichtseite beginnend ausgehärtet wird.

18. Verfahren nach einem der Ansprüche 12 bis 17, **dadurch gekennzeichnet, daß** die Presse während dem Aushärten zum Ausgleich des Schrumpfs nachgefahren wird.

19. Verfahren nach einem der Ansprüche 11 bis 18, **dadurch gekennzeichnet, daß** eine Presse mit einer Oberform verwendet wird, welche an ihrem Rand ein aufblasbares Gummihohlprofil aufweist, und daß das Hohlprofil beim Aushärten mit Druckluft mit einem Druck von 3 bis 8 bar beaufschlagt wird.

20. Verfahren nach einem der Ansprüche 11 bis 19, **dadurch gekennzeichnet, daß** das aushärtbare Harz zwischen den Träger und die Deckschicht unter Vakuum eingespritzt wird,
wobei das Harz durch ein im wesentlichen mittiges Einspritzloch in dem Träger zugeführt wird.

21. Verfahren nach einem der Ansprüche 11 bis 19, **dadurch gekennzeichnet, daß** der plattenförmige Träger aus einer Vielzahl einzelner Holzwerkstoffstäben in der durch die vorgefertigte Deckschicht mit einstückig angeformten Abdeckleisten gebildeten Form hergestellt wird.

22. Verfahren nach einem der Ansprüche 11 bis 21, **dadurch gekennzeichnet, daß** die ausgehärtete Deckschicht mit Abdeckleisten, vorzugsweise nach einer Entnahme aus der Form einem Temperungsschritt bei einer Temperatur unterhalb dem Glasübergangspunkt unterworfen wird.

23. Verfahren nach einem der Ansprüche 11 bis 22, **dadurch gekennzeichnet, daß** als aushärtbares Harz ein Ein- oder Zweikomponenten-Polyurethankleber verwendet wird.

24. Verfahren nach Anspruch 23, **dadurch gekennzeichnet, daß** der Polyurethankleber aufschäumbar ist.

## Claims

1. A panel-shaped material, in particular for use as a kitchen worktop and table top,
having a panel-shaped support made from a wood material, a covering layer which is connected flat to the panel-shaped support and having a covering, which is disposed on at least one side edge of the support and which is constructed in one piece with the covering layer,
**characterised in that** a covering layer is disposed on the support on one side only and without a counteracting layer,
**in that** the covering layer and the covering for the side edges are produced from a plastic material filled with an inorganic filler, the covering layer having a thickness ranging from 5 to 10 mm,
**and in that** the covering layer is connected to the support by means of a curable resin across its entire surface and substantially without the formation of bubbles.

2. A panel-shaped material according to Claim 1,
**characterised in that** the covering is constructed as a cover strip
and **in that** the thickness of the cover strip is preferably greater than the thickness of the covering layer.

3. A panel shaped material according to Claim 2,
**characterised in that** cover strips that are in one piece with the covering layer are disposed on all side edges of the support.

4. A panel-shaped material according to Claim 2 or 3,
**characterised in that** at least one of the cover strips forms a visible edge and has a thickness which permits machining.

5. A panel-shaped material according to Claim 4,
**characterised in that** the cover strip forming the visible edge has a thickness which is at least 1.3 times, moreover preferably at least 1.5 times, the thickness of the covering layer.

6. A panel-shaped material according to one of the preceding Claims,
**characterised in that** the thermal conductivity of the covering layer perpendicularly to its surface is at least 0.6 W/mK.

7. A panel-shaped material according to one of the preceding Claims,
**characterised in that** the modulus of elasticity of the plastic material filled with inorganic filler is 5,000 N/mm2 or more.

8. A panel-shaped material according to one of the preceding Claims,
**characterised in that** the support is formed by a so-called OSB material.

9. A panel-shaped material according to one of Claims 1 to 7,
**characterised in that** the support is formed by a rod-bonded or bar-bonded wooden material or an end-grain timber panel.

10. A panel-shaped material according to one of Claims 8 or 9,
**characterised in that** the timber moisture of the wooden material is 7 to 8 % by weight.

11. A method for the production of a panel-shaped material according to one of Claims 1 to 10,
**characterised in that** the covering layer together with the side edge cover is formed in a mould by means of curing a plastic material that is filled with an inorganic filler
and **in that** the panel-shaped support is stuck to the reverse of the covering layer by means of a curable resin without a counteracting layer over its complete surface and substantially without the formation of bubbles.

12. A method according to Claim 11,
**characterised in that** to form the covering layer from plastic material, a mixture of a curable reaction mass is manufactured to form a polymer phase with a particulate filling material incorporated therein from a resin material filled with the inorganic filler, whereby the polymer phase comprises up to 20 % by weight inorganic adjuvants, in relation to the plastic material, whereby the particulate filling material can swell in the reaction mass, whereby the filled resin material comprises a proportion of inorganic filler ranging from 50 to 80 % by weight with an average grain size of approx. 5 to 100 µm and whereby the filling material has a grain size ranging from 60 to 8,000 µm and is contained in the plastic material in a percentage of from approx. 30 to 75 % by weight,
**in that** the filling material is left in the curable reaction mass to swell until the mixture can no longer be cast,
**in that** for curing the mixture is poured into one of the mould halves disposed in a press, the mould is closed and a predetermined mould pressure is applied to the mould and the mixture is thermally cured in the closed mould.

13. A method according to Claim 12,
**characterised in that** the mixture is pressed and cured in the mould at 100 to 130 °C and a pressure of 3 to 10 bars, whereby firstly the region of the cover strips(s) and then the region of the covering layer is cured by controlling the temperature of the mould.

14. A method according to Claim 13,
**characterised in that** the mixture is cured for a period of 20 minutes to 1 hour.

15. A method according to one of Claims 11 to 14,
**characterised in that** a mould is used to produce the covering layer and the cover strips(s), during which the part of the mould that is to be allocated to the cover strips can be heated separately from the part of the mould corresponding to the covering layer.

16. A method according to Claim 15,
**characterised in that** the heating of the parts of the mould is chosen so that the cover strips are cured with a lead time of 2 to 10 minutes in comparison with the covering layer.

17. A method according to one of Claims 11 to 16,
**characterised in that** the covering layer is cured starting on the visible side.

18. A method according to one of Claims 12 to 17,
**characterised in that** the press is followed during curing to compensate for the shrinkage.

19. A method according to one of Claims 11 to 18,
**characterised in that** a press is used with an upper mould which at its edge comprises an inflatable rubber hollow sect ion,
**and in that** the hollow section is supplied with compressed air with a pressure of 3 to 8 bars during curing.

20. A method according to one of Claims 11 to 19,
**characterised in that** the curable resin is injected under vacuum between the support and the covering layer, whereby the resin is supplied through a substantially central injection hole in the support.

21. A method according to one of Claims 11 to 19,
**characterised in that** the panel-shaped support is produced from a plurality of individual bars of wooden material in the mould formed by the prefabricated covering layer with cover strips integrally formed in one piece.

22. A method according to one of Claims 11 to 21,
**characterised in that** the cured covering layer with cover strips is subjected to a tempering stage at a temperature beneath the glass transition point, preferably after being removed from the mould.

23. A method according to one of Claims 11 to 22,
**characterised in that** a single-constituent or double-constituent polyurethane adhesive is used as the curable resin.

24. A method according to Claim 23,
**characterised in that** the polyurethane adhesive is expandable.

## Revendications

1. Matériau en forme de panneau, en particulier à utiliser comme table de travail de cuisine et panneau de table, avec un support en forme de panneau en bois, une couche de couverture plane, reliée au support en forme de panneau et avec un recouvrement, qui est formé en une pièce avec la couche de couverture, disposé sur au moins un bord latéral du support, **caractérisé en ce qu'**une couche de couverture est disposée sur le support seulement d'un côté et sans couche de contre-traction, **en ce que** la couche de couverture et le recouvrement des bords latéraux sont préparés en une matière plastique chargée d'une charge inorganique, où la couche de couverture présente une épaisseur allant de 5 à 10 nm et **en ce que** la couche de couverture est reliée au support à l'aide d'une résine durcissable, sur toute la surface et essentiellement sans bulle.

2. Matériau en forme de panneau selon la revendication 1, **caractérisé en ce que** le recouvrement est formé comme un couvre-joints et que l'épaisseur du couvre-joint est de préférence, supérieure à l'épaisseur de la couche de couverture.

3. Matériau en forme de panneau selon la revendication 2, **caractérisé en ce que** sur tous les bords latéraux du support, sont disposés des couvre-joints, d'une pièce avec la couche de couverture.

4. Matériau en forme de panneau selon la revendication 2 ou 3, **caractérisé en ce qu'**au moins un des couvre-joints forme un bord visible et présente une épaisseur qui permet un traitement d'usinage.

5. Matériau en forme de panneau selon la revendication 4, **caractérisé en ce que** le couvre-joint formant le bord visible présente une épaisseur, qui s'élève à au moins 1,3 fois l'épaisseur de la couche de couverture, de préférence au moins 1,5 fois.

6. Matériau en forme de panneau selon l'une quelconque des revendications précédentes, **caractérisé en ce que** la conductibilité thermique de la couche de couverture s'élève, perpendiculairement à sa surface, à au moins 0,6 W/mK.

7. Matériau en forme de panneau selon l'une quelconque des revendications précédentes, **caractérisé en ce que** le module d'élasticité de la matière plastique chargée de la charge inorganique s'élève à 5000 N/mm² ou plus.

8. Matériau en forme de panneau selon l'une quelconque des revendications précédentes, **caractérisé en ce que** le support est formé du matériau dit OSB.

9. Matériau en forme de panneau selon l'une quelconque des revendications 1 à 7, **caractérisé en ce que** le support est formé d'un panneau en contreplaqué ou d'un panneau en bois de bout.

10. Matériau en forme de panneau selon l'une quelconque des revendications 8 ou 9, **caractérisé en ce que** l'humidité du bois du matériau en bois s'élève de 7 à 8% en poids.

11. Procédé de préparation d'un matériau en bois selon l'une quelconque des revendications 1 à 10, **caractérisé en ce que** la couche de couverture avec le recouvrement des bords latéraux est formé dans un moule, par durcissement d'une matière plastique chargée d'une charge inorganique et que la face arrière de la couche de couverture est collée au support en forme de panneau sans couche de contre-traction, sur toute la surface et essentiellement sans bulle, à l'aide d'une résine durcissable.

12. Procédé selon la revendication 11, **caractérisé en ce que** pour la formation de la couche de couverture en matière plastique, on prépare une masse de réaction durcissable pour former une phase polymère avec une charge particulaire incorporée, en un matériau résineux chargé d'une charge inorganique, où la phase polymère comprend jusqu'à 20% en poids, sur base de la matière plastique, de granulats inorganiques, où la charge particulaire dans la masse de réaction peut être gonflée, où le matériau résineux chargé présente une fraction en charge organique située dans l'intervalle allant de 50 à 80% en poids avec une granulométrie moyenne allant de 5 à 100 µm et où la charge présente une granulométrie allant de 60 à 8000 µm et est présente en une proportion de 30 à 75% en poids dans la matière plastique, **en ce que** la charge est laissée dans la masse de réaction pour gonfler, jusqu'à ce que le mélange ne soit plus fluide, **en ce que** le mélange est disposé pour durcir, dans un demi-moule disposé dans une presse, le moule est fermé et une pression déterminée est appliquée sur le moule, le mélange est durci thermiquement dans le moule fermé.

13. Procédé selon la revendication 12, **caractérisé en ce que** le mélange est comprimé et durci de 100 à 130°C et sous une pression de 3 à 10 bar, où par un réglage de la température du moule, on durcit d'abord dans la zone des couvre-joints et ensuite, de la couche de couverture.

14. Procédé selon la revendication 13, **caractérisé en ce que** le mélange est durci pendant une période allant de 20 minutes à 1 heure.

15. Procédé selon l'une quelconque des revendications 11 à 14, **caractérisé en ce que** l'on utilise un moule pour la préparation de la couche de couverture et des couvre-joints, où la partie imputée aux couvre-joints du moule peut être chauffée séparément de la partie correspondant à la couche de couverture du moule.

16. Procédé selon la revendication 15, **caractérisé en ce que** le chauffage de la partie du moule est choisie de sorte que les couvre-joints sont durcis avec un délai de 2 à 10 minutes par rapport à la couche de couverture.

17. Procédé selon l'une quelconque des revendications 11 à 16, **caractérisé en ce que** l'on durcit la couche de couverture en commençant sur la face visible.

18. Procédé selon l'une quelconque des revendications 12 à 17, **caractérisé en ce que** l'on agit sur la presse pendant le durcissement pour égaliser le retrait.

19. Procédé selon l'une quelconque des revendications 11 à 18, **caractérisé en ce que** l'on utilise une presse avec un moule supérieur, qui présente dans un cadre, un profil creux en caoutchouc pouvant être gonflé et **en ce que** le profil creux est soumis lors du durcissement, à de l'air comprimé avec une pression allant de 3 à 8 bar.

20. Procédé selon l'une quelconque des revendications 11 à 19, **caractérisé en ce que** l'on injecte la résine durcissable entre le support et la couche de couverture sous vide, où la résine est amenée par un orifice d'injection essentiellement central dans le support.

21. Procédé selon l'une quelconque des revendications 11 à 19, **caractérisé en ce que** l'on prépare le support en forme de panneau à partir d'un certain nombre de bâtonnets en bois individuels dans le moule formé par la couche de couverture finie avec les couvre-joints d'une pièce avec celle-ci.

22. Procédé selon l'une quelconque des revendications 11 à 21, **caractérisé en ce que** la couche de couverture durcie avec les couvre-joints, de préférence après prélèvement du moule, est soumise à une. étape d'équilibrage de la température à une température inférieure au point de transition vitreuse.

23. Procédé selon l'une quelconque des revendications 11 à 22, **caractérisé en ce que** l'on utilise comme résine durcissable, une colle polyuréthanne à un ou deux composants.

24. Procédé selon la revendication 23, **caractérisé en ce que** le colle polyuréthanne peut être moussée.
